# EUROPÄISCHE PATENTSCHRIFT

(11) **EP 3 802 224 B1**
(45) Veröffentlichungstag und Bekanntmachung des Hinweises auf die Patenterteilung: **08.04.2026**
(21) Anmeldenummer: 19728059.7
(22) Anmeldetag: 03.06.2019
(51) Int. Cl.: B60R 7/08, G07C 9/00

(54) **AUTHENTIFIZIERUNGSSYSTEM SOWIE SICHERUNGSVERFAHREN HIERZU**
AUTHENTICATION SYSTEM AND SECURITY PROCEDURE THEREFOR
SYSTÈME D'AUTHENTIFICATION ET PROCÉDÉ DE SÉCURISATION ASSOCIÉ

(30) Priorität: 01.06.2018 DE 102018113162
(43) Veröffentlichungstag der Anmeldung: 14.04.2021
(73) Patentinhaber: Huf Hülsbeck & Fürst GmbH & Co. KG, 42551 Velbert (DE)
(72) Erfinder: BAMBECK, Daniel, 45149 Essen (DE); GENNERMANN, Sven, 42551 Velbert (DE); SCHIEMANN, Stefan, 50969 Köln (DE); NEITZEL, Robin, 44799 Bochum (DE)
(74) Vertreter: Bals & Vogel Patentanwälte PartGmbB
(86) Internationale Anmeldenummer: PCT/EP2019/064354
(87) Internationale Veröffentlichungsnummer: WO 2019/229269

(56) Entgegenhaltungen:
- CN-U- 205 706 463
- DE-A1- 10 149 344
- DE-A1- 102004 005 513
- DE-A1- 102005 059 061
- DE-A1- 102006 001 410
- DE-A1- 102014 119 287
- GB-A- 1 154 671
- GB-A- 2 369 406
- US-B1- 6 611 232

## Beschreibung

Die vorliegende Erfindung betrifft ein Authentifizierungssystem gemäß der im Oberbegriff des unabhängigen Vorrichtungsanspruchs näher definierten Art. Ferner bezieht sich die Erfindung auf ein Überwachungsverfahren gemäß dem Oberbegriff des unabhängigen Verfahrensanspruchs.

Es ist bekannt, dass insbesondere in Großstädten das sogenannte Carsharing immer beliebter wird. Beim Carsharing werden Fahrzeuge durch einen Carsharing-Anbieter zur Verfügung gestellt, welche ein Benutzer ausleihen kann, um damit bspw. eine bestimmte Strecke zurückzulegen oder eine bestimmte Erledigung, wie einen Einkauf, vorzunehmen. Anschließend stellt der Benutzer das Fahrzeug wieder ab, sodass dieses für den nächsten Benutzer zur Verfügung steht.

Dabei ist es leider auch üblich, dass der ID-Geber (auch Schlüssel genannt) zum Öffnen des Schließsystems und zum Starten des Motors bspw. im Handschuhfach des Carsharing-Fahrzeugs angeordnet wird. Dabei ist der ID-Geber jedoch bspw. für einen Einbrecher zugänglich, sofern sich dieser einen unbefugten Zutritt zum Fahrzeug, z. B. durch Einschlagen einer Scheibe, verschafft, sodass es für den Einbrecher ein Leichtes ist, auch die Wegfahrsperre mit dem im Handschuhfach befindlichen ID-Geber zu überwinden.

Problematisch ist ferner, dass Einzellösungen zum Zugang eines jeden Benutzers zur Wegfahrsperre, bspw. durch einen vom Carsharing-Anbieter zur Verfügung gestellten Code, größere Umrüstungen oder teure Änderungen am Fahrzeug erfordern würden. Größere Umrüstungen können z. B. einen Einbau einer speziellen Schließanlage des Fahrzeugs für den Carsharing-Betrieb sein. Üblicherweise handelt es sich bei Carsharing-Fahrzeugen jedoch häufig um Serienfahrzeuge, welche mit geringstmöglichen Aufwand in Carsharing-Fahrzeuge umgewandelt werden sollen, sodass möglichst geringe Kosten entstehen.

Weitere Schließanlagen sind aus den Schriften DE 10 2006 001410 A1, welche den Oberbegriff der Ansprüche 1 und 12 offenbart, und US 6 611 232 B1 bekannt.

Nachteilhaft bei den bekannten Lösungen ist, dass der ID-Geber ungesichert im Fahrzeuginnenraum untergebracht ist. Es ist daher eine Aufgabe der vorliegenden Erfindung, die voranstehend beschriebenen Nachteile zumindest teilweise zu beheben. Insbesondere ist es Aufgabe der vorliegenden Erfindung, den ID-Geber nicht frei und zugänglich im Fahrzeug unterzubringen.

Die voranstehende Aufgabe wird gelöst durch ein Authentifizierungssystem mit den Merkmalen des unabhängigen Vorrichtungsanspruchs und durch ein Überwachungsverfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Authentifizierungssystem beschrieben sind, selbstverständlich auch im Zusammenhang mit dem erfindungsgemäßen Überwachungsverfahren, und jeweils umgekehrt, so dass bezüglich der Offenbarung zu den einzelnen Erfindungsaspekten stets wechselseitig Bezug genommen wird bzw. werden kann. Die Aufgabe wird insbesondere gelöst durch ein Authentifizierungssystem für ein Fahrzeug, insbesondere ein KFZ, zur Aufbewahrung eines ID-Gebers in dem Fahrzeug mit einem Außengehäuse, in welcher der ID-Geber aufbewahrbar ist. Hierbei ist vorgesehen, dass eine elektronische Sicherungseinheit vorgesehen ist, um zumindest die sichere Aufbewahrung des ID-Gebers innerhalb des Außengehäuses zu überwachen. Sobald ein nicht berechtigter Benutzer versucht an den ID-Geber aus dem Außengehäuse zu gelangen, bemerkt die elektronische Sicherungseinheit den unerlaubten Zugriff und löst ein Alarmsignal aus.

Kern der vorliegenden Erfindung ist es somit, dass der (externe) ID-Geber gesichert und unzulänglich durch die elektronische Sicherungseinheit in dem Außengehäuse des Authentifizierungssystems untergebracht ist. Damit ist der ID-Geber nicht (nur) mechanisch, sondern auch elektrisch gesichert im Authentifizierungssystem untergebracht. Sobald ein Diebstahlversuch und/oder ein Manipulationsversuch an diesem System stattfindet, wird dieses durch die elektronische Sicherungseinheit erfasst und es kann ein entsprechendes Alarmsignal ausgegeben werden. Anhand dieses Alarmsignals kann dann zumindest ein akustischer Warnton, eine endgültige Sperre der Wegfahrsperre des Fahrzeuges oder aber eine Zerstörung des ID-Gebers erfolgen. Weitere Vorgehensweisen bei einem Alarmsignal werden im folgenden Text aufgeführt. Gerade die elektrische Sicherung des ID-Gebers durch die elektronische Sicherungseinheit ist extrem zuverlässig und auch kostengünstig zu realisieren. Bei einer mechanischen Sicherung des ID-Gebers ist der konstruktive Aufbau sowie die Wahl der Materialien (gehärtete Metalllegierungen) dagegen sehr aufwendig, vergleichbar zum Aufbau eines kleinen Tresors.

Unter dem Begriff Authentifizierungssystem wird im Rahmen der vorliegenden Erfindung verstanden, dass durch dieses System möglich ist, ein Fahrzeug ordnungsgemäß zu öffnen und auch zu starten, wenn die entsprechende Authentifizierung vorliegt. Dieses geschieht jedoch nicht, indem der ID-Geber für das entsprechende Fahrzeug direkt betätigt wird, sondern indirekt über das Authentifizierungssystem. Somit ist das Authentifizierungssystem zwischen dem Benutzer des Fahrzeuges und dem fahrzeugseitigen Zugangs- und Berechtigungssystem mit dem entsprechenden ID-Geber zwischengeschaltet. Zweckmäßigerweise kann das Authentifizierungssystem mit einem mobilen Kommunikationsgerät vom Benutzer (Carsharing-Fahrer), wie z. B. einem Mobilfunktelefon, einem Tablet oder einem Laptop (drahtlos bzw. per Funk) geöffnet werden. Hierbei kann das mobile Kommunikationsgerät direkt über eine (erste) Schnittstelle mit dem Authentifizierungssystem und/oder indirekt über eine weitere Schnittstelle und einem externen Netzwerk oder externen Server mit dem Authentifizierungssystem kommunizieren.

Der entsprechende Benutzer des Authentifizierungssystems kann über einen entsprechenden Freigabecode durch sein mobiles Kommunikationsgerät das Authentifizierungssystem ansprechen und sofern der Freigabecode und ggf. weitere Berechtigungsabfragen positiv vorliegen, eine Betätigung des ID-Gebers innerhalb des Fahrzeuges auslösen. Hierfür kann das entsprechende Betätigungssignal am mobilen Kommunikationsgerät und/oder einem Netzwerk oder Server erzeugt werden, welches zweckmäßigerweise außerhalb des Fahrzeuges generiert worden ist, z. B. anhand des Freigabecodes und ggf. weiterer Berechtigungen, wie z. B. Angaben zur Person, Kreditkarte, Standort, Zeitspanne und/oder dergleichen. Dabei kann nur eine (vorzugsweise drahtlose) Kommunikation zwischen dem mobilen Kommunikationsgerät und dem Authentifizierungssystem stattfinden. Auch ist es denkbar, dass zusätzlich oder auch nur eine Kommunikation zwischen dem externen Netzwerk oder externen Server und dem Authentifizierungssystem erfolgt. Sofern nur das externe Netzwerk oder der externe Server mit dem Authentifizierungssystem kommuniziert, kann die Kommunikation über die (erste) Schnittstelle erfolgen. Dabei ist davon auszugehen, dass im Vorfeld das mobile Kommunikationsgerät zur Authentifizierung mit dem externen Netzwerk oder dem externen Server Daten austauscht, damit der Freigabecode und ggf. weitere Berechtigungsabfragen positiv vorliegen.

Erfindungsgemäß ist vorgesehen, dass eine Elektronikeinheit für das Authentifizierungssystem vorhanden ist, wobei die Elektronikeinheit zumindest eine Schnittstelle aufweist, wodurch der ID-Geber von außerhalb des Authentifizierungssystems betätigbar ist. Durch diese Schnittstelle kann die Datenkommunikation zur Authentifizierung des Benutzers zwischen dem mobilen Kommunikationsgerät und/oder dem externen Netzwerk oder Server erfolgen. Bei dieser Schnittstelle kann es sich vorzugsweise um eine Bluetooth- oder NFC-Schnittstelle handeln, insbesondere wenn die Kommunikation nur zwischen dem mobilen Kommunikationsgerät und dem Authentifizierungssystem erfolgt. Auch kann eine Mobilfunkschnittstelle, wie bspw. LTE, UMTS oder dergleichen vorgesehen sein. Zweckmäßigerweise findet eine verschlüsselte Datenübertragung (bei dieser Schnittstelle) statt, um Manipulationen zu erschweren.

Des Weiteren ist es denkbar, dass der ID-Geber, vorzugsweise mechanisch, durch das Authentifizierungssystem betätigbar ist. Hierbei kann vorzugsweise ein Betätigungssignal für den ID-Geber von außerhalb, insbesondere über eine Schnittstelle, zum Authentifizierungssystems gelangen. Somit wird der ID-Geber nicht direkt vom Benutzer betätigt, was auch nicht möglich ist, da dieser unzugänglich innerhalb des Authentifizierungssystems untergebracht ist. Vielmehr erfolgt eine gesicherte (rein) mechanische Betätigung des ID-Gebers nach einer erfolgreichen Authentifizierung (bei Vorlage eines Freigabecodes) indirekt durch das Authentifizierungssystem selber. Hiermit ist das Authentifizierungssystem ideal als Nachrüstsystem für bestehende Serien-Fahrzeuge (zu Carsharing-Fahrzeuge), da kein Eingriff in die vorhandene Fahrzeugelektronik erforderlich ist.

Es ist ferner denkbar, dass ein elektrischer Antrieb, insbesondere zur mechanischen Betätigung des ID-Gebers, innerhalb des Außengehäuses vorgesehen ist, wobei vorzugsweise der Antrieb durch die Elektronikeinheit, insbesondere aufgrund eines vorliegenden Betätigungssignals, welches von außerhalb zum Authentifizierungssystem gelangt ist, ansteuerbar ist. Damit muss auch der grundsätzlich vorhandene externe ID-Geber, der üblicherweise vom Benutzer bei Serien-Fahrzeugen (noch nicht umgebaute Carsharing-Fahrzeuge) genutzt wird, nicht verändert werden. Damit bietet das erfindungsgemäße System eine große Vielzahl von Einsatzmöglichkeit für Carsharing-Fahrzeuge, da es unabhängig vom jeweiligen Fahrzeughersteller verwendbar ist.

Bspw. kann es vorgesehen sein, dass eine Einlage zur mechanischen Fixierung des ID-Gebers vorgesehen ist, und die Einlage innerhalb des Außengehäuses angeordnet ist. Dabei dient diese Einlage dazu, den externen ID-Geber lokal innerhalb des Außengehäuses zu positionieren. Idealerweise ist dafür ein Aufnahmebereich innerhalb der Einlage vorgesehen, der vorzugsweise geometrisch komplementär zur Außenform des ID-Gebers ausgestaltet ist, um somit den ID-Geber innerhalb der Einlage sicher mechanisch fixieren zu können. Auch ist es denkbar, dass durch einen Betätigungsmechanismus, der vorzugsweise durch den Antrieb antreibbar ist, der ID-Geber mechanisch betätigbar ist. Dieser mechanische Betätigungsmechanismus kann mit seinem Antriebsrad und zumindest zwei Betätigungsstößeln für den externen ID-Geber ausgestaltet sein, wobei vorzugsweise die Betätigungsstößeln drehfest (drehen sich immer mit der Welle mit), insbesondere über eine Vielzahnverbindung, auf einer Antriebswelle angeordnet sind. Das Antriebsrad des Betätigungsmechanismus ist zweckmäßigerweise fest mit der Antriebswelle (und somit auch mit den Betätigungsstößeln) verbunden und kann durch ein Schneckenrad vom elektrischen Antrieb angetrieben werden. Der Antrieb selbst kann durch die Elektronikeinheit angesteuert werden. Auch kann es vorgesehen sein, dass durch einen Batterieadapter die Spannungsversorgung des ID-Gebers ausführbar ist, wobei insbesondere der Batterieadapter elektrisch mit der Elektronikeinheit verbindbar ist. Durch den Batterieadapter kann auch bei einer Überspannung, die bewusst durch die Elektronikeinheit erzeugbar ist, eine Zerstörung der Elektronik vom ID-Geber vorgenommen werden. Dieses kann insbesondere bei einem vorliegenden Alarmsignal erfolgen, um somit einem unberechtigten Benutzer jede Möglichkeit einer weiteren Verwendung des ID-Gebers bei einem Aufbruchsversuch zunehmen.

Es kann optional möglich sein, dass zumindest ein Verschlusselement vorgesehen ist, womit insbesondere eine Öffnung im Außengehäuse zumindest teilweise oder ganz verschließbar ist. Somit ist sichergestellt, dass der ID-Geber nur durch die vom Verschlusselement geschlossene Öffnung aus dem Außengehäuse des Authentifizierungssystems entfernbar ist. Ansonsten kann nur eine Zerstörung des Gehäuses zu einer unberechtigten Entnahme des ID-Gebers führen. Vorteilhafterweise ist es möglich, dass das Verschlusselement auch zur mechanischen Fixierung der Elektronikeinheit innerhalb des Außengehäuses dient. Damit können mit dem entsprechenden Verschlusselement gleichzeitig zwei Funktionen erreicht werden.

Weiter ist im Rahmen der Erfindung denkbar, dass zumindest ein Verschlusselement durch wenigstens ein Befestigungselement mit dem Außengehäuse in einer Montageposition befestigbar ist. Somit ist das Verschlusselement sicher in der Öffnung des Außengehäuses fixierbar. Hierbei kann wenigstens ein Überwachungssensor (der elektronischen Sicherungseinheit) zumindest das Verschlusselement in seiner Schließposition oder das Befestigungselement in der Montageposition hin überwachen. Damit kann umgehend ein unberechtigtes Entfernen des Befestigungselements zum Öffnen des Verschlusselements bzw. der Öffnung direkt messtechnisch durch einen Überwachungssensor erfasst werden.

Die Montageposition ist diejenige Position, in der das Authentifizierungssystem einsatzbereit im Fahrzeug befestigt (durch zumindest ein Fixierelement) und verschlossen (durch zumindest ein Verschlusselement) ist. In dieser Position sind die vorhandenen Überwachungssensoren der Sicherungseinheit in der Lage, einen Aufbruchs- und/oder Manipulationsversuch umgehend zu detektieren.

Zusätzlich ist es von Vorteil, wenn die Einlage zur mechanischen Fixierung des ID-Gebers auch mit einem weiteren Verschlusselement versehen ist. Hierbei können die vorhandenen Verschlusselemente in einer Montageposition die gesamte Öffnung vom Außengehäuse gemeinsam verschließen. Sowohl die Elektronikeinheit als auch die Einlage kann durch Halte- und/oder Rastmittel am oder innerhalb des Außengehäuses befestigt sein. Diese Halte- und/oder Rastmittel können derart in der Montageposition mit den Überwachungssensoren zusammenwirken, dass jede Veränderung zum Lösen der Halte-und/oder Rastmittel zu einem Meldesignal der Überwachungssensoren führt. Nur in einem sogenannten Werkstattmodus des Authentifizierungssystems kann die Überwachung der Halte- und/oder Rastmittel deaktiviert werden, um Wartungs- und Reparaturarbeiten vornehmen zu können. Zweckmäßigerweise ist eine Umschaltung zwischen einem Überwachungsmodus, in dem eine aktive Überwachung des Authentifizierungssystems, insbesondere des Außengehäuses, stattfindet, und einem Werkstattmodus nur von außen durch einen entsprechenden Entsperrungscode (von einem externen Gerät, Netzwerk und/oder Server) umstellbar. Ohne diesen Entsperrungscode ist eine unberechtigte und unbemerkte Entnahme des ID-Gebers aus dem Authentifizierungssystem nicht möglich.

Ein weiterer Vorteil im Rahmen der Erfindung ist erzielbar, wenn das Authentifizierungssystem über eine eigene Spannungsversorgung verfügt, wobei vorzugsweise die Spannungsversorgung zumindest einen Akku, eine Batterie oder einen Kondensator aufweist. Damit kann das Authentifizierungssystem losgelöst von der Fahrzeugelektronik und/oder der Fahrzeugspannungsversorgung betrieben werden. Somit ist es auch möglich, dass die eigene Spannungsversorgung des Authentifizierungssystems unabhängig von einer Fahrzeugbatterie betreibbar ist. Zweckmäßigerweise kann die eigene Spannungsversorgung des Authentifizierungssystems elektrisch wiederaufladbar ausgestaltet sein. Somit kann sich die Spannungsversorgung selbstständig wiederaufladen und funktionsfähig bleiben, sobald wieder Energie von außen zugeführt wird. Damit reicht es beim Diebstahl nicht aus, die Fahrzeugbatterie abzuklemmen, da das Authentifizierungssystem quasi autark durch die wiederaufladbare Spannungsversorgung ausgestaltet ist.

Nach einer weiteren Möglichkeit kann vorgesehen sein, dass die elektronische Sicherungseinheit Teil der Elektronikeinheit des Authentifizierungssystems ist, wobei insbesondere die elektronische Sicherungseinheit auf einer Leiterplatte der Elektronikeinheit angeordnet ist. Hierdurch kann ein kostengünstiger und platzsparender Aufbau des Authentifizierungssystems erzeugt werden. Auch können Manipulationen erschwert werden, da nicht direkt erkennbar ist, welches elektronische Bauteil zur Sicherungseinheit gehört.

Im Rahmen der Erfindung ist es ferner denkbar, dass ein Störsignalgeber, vorzugsweise in Form einer Antenne, vorhanden ist, mit dem eine Sende- und/oder Empfangssignal des ID-Gebers störbar ist, wobei insbesondere der Störsignalgeber durch die Elektronikeinheit ansteuerbar ist. Durch diesen Störsignal-Geber kann es möglich sein, ein Signal des darüber anordbaren externen ID-Gebers vollständig zu stören. Damit ist der ID-Geber dann nicht in der Lage, ein Öffnungssignal für die Zentralverriegelung oder ein Freigabesignal für das Motor-Management-System bzw. die Wegfahrsperre des Fahrzeuges wirksam auszusenden. Somit ist der ID-Geber durch das ausgesendete Störsignal funktionsunfähig.

Zweckmäßigerweise kann vorgesehen sein, dass die elektronische Sicherungseinheit zumindest einen Überwachungssensor aufweist, und/oder wobei vorzugsweise der Überwachungssensor zumindest einen Schalter, Taster, Magnetschalter, optischer Sensor, Beschleunigungssensor, Berührungssensor, Drucksensor, Kraftsensor, Hallsensor, Temperatursensor und/oder akustischen Sensor umfasst. Durch die jeweiligen Überwachungssensoren sind vielfältige Überwachungen und auch Redundanzen bei der Überwachung zur Erhöhung der Sicherheit vorhanden. Auch ist es denkbar, dass zumindest ein Überwachungssensor unabhängig von der Position der Sicherungseinheit positionierbar ist. Hierdurch kann ein besonders flexibler Einsatz ermöglicht werden.

Es ist ferner vorstellbar, dass zumindest ein Überwachungssensor bei einem Diebstahlversuch und/oder Manipulationsversuch des Authentifizierungssystems zumindest ein Meldesignal generiert und an die elektronische Sicherungseinheit leitet, die zumindest im Überwachungsmodus ein Alarmsignal auslöst. Um z. B. eine Reparatur an dem erfindungsgemäßen zu ermöglichen, muss zuvor der Werkstattmodus (per Fernsteuerung) eingeschaltet werden.

Anhand der vorhandenen Überwachungssensoren ist die elektronische Sicherungseinheit in der Lage, diverse Diebstahl- und Manipulationsversuche messtechnisch zu registrieren. So kann z. B. bei einem Lichtsensor als Überwachungssensor das Aufbohren des Gehäuses optisch erfasst werden, sobald nämlich Licht durch die erstellte Bohrung ins Innere des Außengehäuses gelangt. Auch ist es denkbar, zumindest einen Teilbereich des Außengehäuses mit einem Vakuum- oder Überdruckvolumen auszustatten, welches auf einen normalen Umgebungsdruck abfällt, sobald das Gehäuse an der entsprechenden Stelle durch einen Aufbohrversuch oder sonstigen Versuch gestört wird. Hierzu kann ein Drucksensor den entsprechenden Über- oder Unterdruck überwachen. Außerdem kann z. B. ein Beschleunigungssensor im Inneren des Außengehäuses eine Lageänderung im Ruhezustand (Überwachungsmodus) erfassen. All diese Ereignisse können dazu führen, dass die Überwachungssensoren ein Meldesignal generieren und dieses an die elektronische Sicherungseinheit leiten, die dann zumindest im Überwachungsmodus ein Alarmsignal auslöst.

Ferner ist es optional vorgesehen, dass eine erste Schnittstelle vorgesehen ist, die eine drahtlose Datenübertragung zum Authentifizierungssystem ermöglicht, wobei vorzugsweise die erste Schnittstelle eine bidirektionale Datenübertragung ermöglicht, und/oder wobei vorzugsweise über die erste Schnittstelle eine externe Ansteuerung des Authentifizierungssystems erfolgt, insbesondere um den ID-Geber zu betätigen, und/oder ein Alarmsignal nach außen leitbar ist. Bei dieser Schnittstelle kann es sich vorzugsweise um eine Bluetooth- oder NFC-Schnittstelle handeln, die direkt mit dem mobilen Kommunikationsgerät des Benutzers einen (insbesondere verschlüsselten) Datenaustausch ermöglicht.

Außerdem ist es von Vorteil, wenn eine zweite Schnittstelle vorgesehen ist, die eine Datenübertragung zwischen einer Fahrzeugelektronik und dem Authentifizierungssystem ermöglicht, um vorzugsweise ein Alarmsignal auszutauschen. Durch diese zweite Schnittstelle ist auch eine zusätzliche Sicherung z. B. der Wegfahrsperre vom Managementsystem des Fahrzeuges oder einer elektrischen Lenkradverriegelungsvorrichtung möglich.

Erfindungsgemäß ist ein Fixierelement, insbesondere in Form einer Montageplatte oder einem Gehäusebinder (ähnlich zu einem Kabelbinder), zur Befestigung des Authentifizierungssystems, insbesondere des Außengehäuses, im Fahrzeug vorgesehen. Weiterhin ist zumindest ein Haltemittel zur mechanischen Verbindung zwischen dem Fixierelement und dem Außengehäuse in einer Montageposition vorgesehen, wobei die mechanische Verbindung zwischen dem Fixierelement und dem Außengehäuse in der Montageposition durch zumindest einen Überwachungssensor überwachbar ist. Damit kann auch die Montage des Authentifizierungssystems im Fahrzeug durch zumindest einen Überwachungssensor der elektronischen Sicherungseinheit überwacht werden. Sobald dann eine Manipulation an der Montageplatte bzw. einem Fixierelement vorgenommen wird, kann dieses messtechnisch erfasst werden und zu einem Meldesignal und schließlich zu einem Alarmsignal führen.

Insbesondere kann es sich bei dem Authentifizierungssystem somit um einen ferngesteuerten Schlüsseltresor handeln, in welchem der ID-Geber sicher aufbewahrbar ist. Vorzugsweise kann das Außengehäuse ein Bauraumvolumen aufweisen, welches kleiner oder gleich 200 mm x 150 mm x 150 mm ist. Dadurch kann das Authentifizierungssystem in unterschiedlichsten Bereichen des Fahrzeugs platzierbar sein.

Es ist ferner denkbar, dass zumindest zwei Überwachungssensoren vorhanden sind, wobei vorzugsweise in der Montageposition ein erster Überwachungssensor das Verschlusselement und ein zweiter Überwachungssensor die Montageplatte auf die jeweilige Position hin überwacht. Auch sind weitere Überwachungssensoren denkbar, wie z. B. ein Lichtsensor oder ein Beschleunigungssensor. Durch die unterschiedlichen Sensoren können auch unterschiedliche Aufbruchsversuche detektiert werden.

Bevorzugt kann im Rahmen der Erfindung vorgesehen sein, dass das Außengehäuse ein Kunststoffspritzgussteil ist, wobei vorzugsweise Verstärkungselemente, insbesondere aus Metall, Carbon und/oder Glasfaser, am bzw. im Außengehäuse vorhanden sind. Ein derartiges Außengehäuse ist geometrisch komplex und trotzdem kostengünstig herstellbar. Auch besteht hierbei die Möglichkeit, dieses Außengehäuse druckdicht, lichtdicht und/oder staubdicht abzuschließen. Somit kann das Außengehäuse des Authentifizierungssystems bis auf eine Öffnung, durch die die Elektronikeinheit mit der elektronischen Sicherungseinheit und auch der externe ID-Geber einführbar ist, komplett verschlossen sein. Zum Verschließen dieser Öffnung kann zumindest ein Verschlusselement vorgesehen sein. Idealerweise kann es vorgesehen sein, dass das Außengehäuse bis auf die eine Öffnung in sich umfassend geschlossen ist.

Vorteilhaft ist es darüber hinaus, wenn im Rahmen der Erfindung die Überwachungssensoren über zumindest ein Verbindungskabel mit der Sicherungseinheit elektrisch verbunden ist, wobei insbesondere auch das jeweilige Verbindungskabel auf Manipulationen hin, z. B. durch Widerstandsmessungen, überwachbar ist. Hierdurch sind die Sensoren überall im Außengehäuse platzierbar und einsatzfähig.

Ebenfalls Gegenstand der Erfindung ist ein Überwachungsverfahren zur Überwachung eines Authentifizierungssystems für ein Kraftfahrzeug zur Aufbewahrung eines ID-Gebers in dem Fahrzeug, nach einem der vorherigen Ansprüche, mit einem Außengehäuse, in welcher der ID-Geber aufbewahrbar ist. Hierbei ist vorgesehen, dass ein Diebstahlversuch und/oder Manipulationsversuch des Authentifizierungssystems zumindest ein Alarmsignal auslöst. Damit bringt das erfindungsgemäße Überwachungsverfahren die gleichen Vorteile mit sich, wie sie ausführlich mit Bezug auf das erfindungsgemäße Authentifizierungssystem offenbart worden sind.

Es ist ferner denkbar, dass wenigstens ein mechanischer Diebstahlversuch und/oder wenigstens ein elektronischer oder mechanischer Manipulationsversuch (messtechnisch durch die Überwachungssensoren) erkannt wird und ein Alarmsignal auslöst. Durch diesen Alarm kann auch der ID-Geber funktionsuntauglich gemacht werden.

Bevorzugt kann im Rahmen der Erfindung vorgesehen sein, dass das Überwachungsverfahren zumindest zwei Betriebsmodi aufweist:
a) den Überwachungsmodus, in dem eine aktive Überwachung des Authentifizierungssystems, insbesondere des Außengehäuses, stattfindet
b) den Werkstattmodus, in dem die Überwachung deaktiviert ist, um Wartungs- und Reparaturarbeiten am Authentifizierungssystem vornehmen zu können.

Auch sind weitere Betriebsmodi denkbar, wie z. B. der Alarmmodus, in dem ein Alarmsignal ausgelöst worden ist.

Des Weiteren ist es im Rahmen der Erfindung optional möglich, dass zumindest im Überwachungsmodus das Authentifizierungssystem den ID-Geber, insbesondere mechanisch, betätigen kann, wobei vorzugsweise ein Betätigungssignal für den ID-Geber von außerhalb, vorzugsweise über eine Schnittstelle, zum Authentifizierungssystem gelangt. Damit ist das Verfahren problemlos geeignet Serien-Fahrzeuge in Carsharing-Fahrzeuge ohne einen Eingriff in die bestehende Fahrzeugelektronik umzurüsten.

Bspw. kann es vorgesehen sein, dass bei einem ausgelösten Alarmsignal eine Zerstörung des ID-Gebers, insbesondere der Elektronik des ID-Gebers, durchgeführt wird, und/oder dass bei einem ausgelösten Alarmsignal ein Warnsignal an das Managementsystem von Fahrzeug geleitet wird, wodurch vorzugsweise eine elektrische Wegfahrsperre blockiert wird, und/oder dass bei einem ausgelösten Alarmsignal eine akustische Sirene angesteuert wird, und/oder dass bei einem ausgelösten Alarmsignal ein Warnsignal an einen externen Assistenz-Server weitergeleitet wird, und/oder dass bei einem ausgelösten Alarmsignal die Lichtanlage des Fahrzeuges eingeschaltet wird und/oder ein Notsignal an die Polizei oder einen Sicherheitsdienst geschickt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: dreidimensionale Ansicht auf ein erfindungsgemäßes Authentifizierungssystem und des entsprechenden Außengehäuses im verschlossenen Zustand,
- Fig. 2: dreidimensionale Ansicht einer Einlage zur mechanischen Fixierung des ID-Gebers mit einem Batterieadapter,
- Fig. 3: Vorder- und Rückseite eines externen ID-Gebers,
- Fig. 4: dreidimensionale Ansicht eines Authentifizierungssystems aus Fig. 1 mit Elektronikeinheit u. a. mit einem Betätigungsmechanismus für den externen ID-Geber und einem Störsignal-Geber ohne Einlage zur mechanischen Fixierung des ID-Gebers,
- Fig. 5: Bodenansicht des Authentifizierungssystems aus Fig. 1 mit montiertem Fixierelement, in Form einer Montageplatte,
- Fig. 6: Rückansicht des Authentifizierungssystems aus Fig. 1 mit montiertem Fixierelement an der Bodenseite,
- Fig. 7: schematische Schnittansicht eines Betätigungsmechanismus mit einem entsprechenden Antrieb und einem ID-Geber innerhalb der Einlage sowie
- Fig. 8: erfindungsgemäßes Fahrzeug mit dem erfindungsgemäßen Authentifizierungssystem und einem mobilen Kommunikationsgerät zur Ansteuerung.

In den nachfolgenden Figuren werden für die gleichen technischen Merkmale auch von unterschiedlichen Ausführungsbeispielen die identischen Bezugszeichen verwendet.

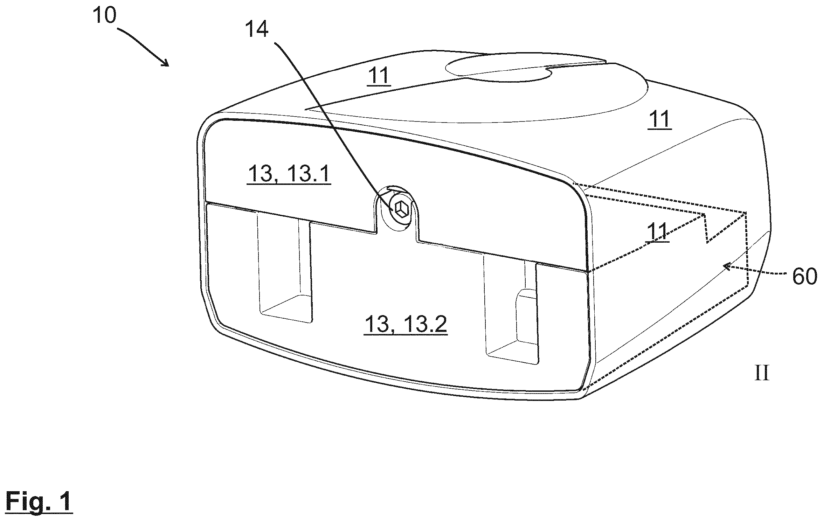

In der Fig. 1 ist eine dreidimensionale Ansicht eines erfindungsgemäßen Authentifizierungssystems 10 für ein Fahrzeug 100, insbesondere eines Kraftfahrzeuges 100 dargestellt. Hierbei weist das Authentifizierungssystem 10 vorteilhafterweise ein einteiliges Außengehäuse 11 auf, welches mit nur einer Öffnung 12 versehen ist. Diese Öffnung 12 dient dazu, um die Elektronikeinheit 20 sowie eine Einlage 60 zur mechanischen Fixierung des ID-Gebers 80 im Inneren des Außengehäuses 11 anordnen zu können. Zweckmäßigerweise wird die Öffnung 12 des Außengehäuses 11 durch zumindest ein Verschlusselement 13, im vorliegenden Fall zwei Verschlusselemente, nämlich einem ersten 13.1 und einem zweiten Verschlusselement 13.2, verschlossen. Die beiden Verschlusselemente 13 werden hierbei durch ein Befestigungselement 14, insbesondere in Form einer Schraube miteinander verbunden. Um nun den ID-Geber 80 sicher und unzugänglich in dem Außengehäuse 11 des Authentifizierungssystems 10 unterzubringen, ist eine elektronische Sicherungseinheit vorgesehen, die eine sichere Aufbewahrung innerhalb des Außengehäuses 11 überwacht.

In den nachfolgenden Figuren werden einzelne Baueinheiten des erfindungsgemäßen Authentifizierungssystems näher dargestellt.

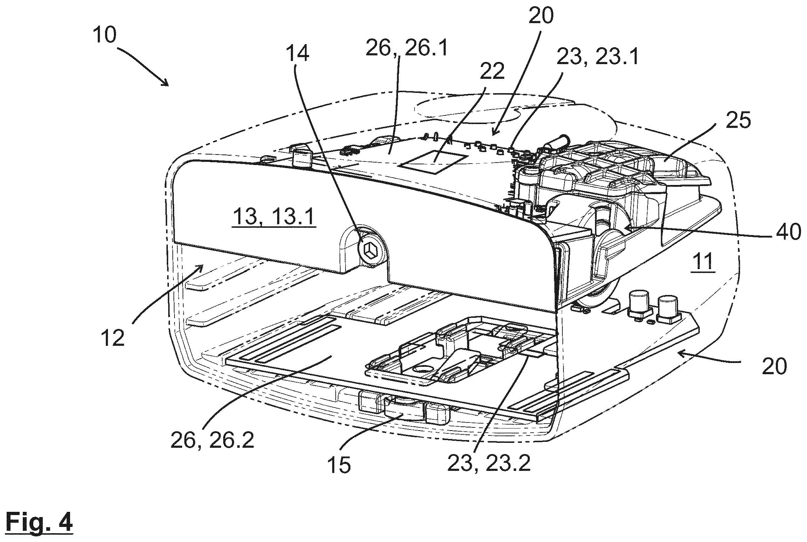

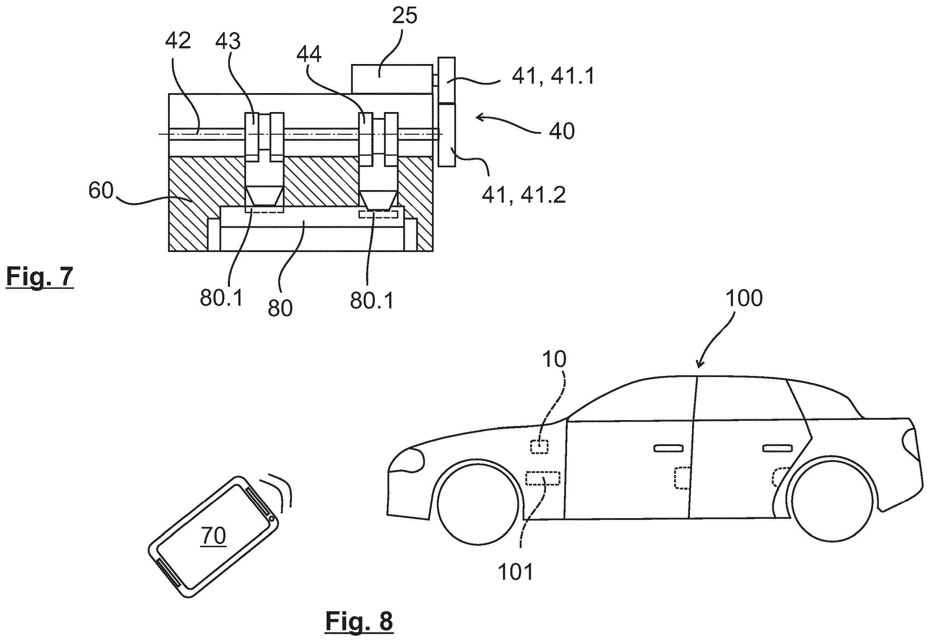

So zeigt Fig. 4 beispielhaft eine Elektronikeinheit 20 innerhalb des Außengehäuses 11 für das Authentifizierungssystem 10. Diese ist zusätzlich mit einem Betätigungsmechanismus 40 zur mechanischen Betätigung des ID-Gebers 80 versehen (s. hierzu Fig. 7). Dabei weist diese elektronische Sicherungseinheit zumindest zwei Leiterplatten 26 auf, nämlich eine obere 26.1 und eine untere Leiterplatte 26.2, die über elektrische Verbindungen miteinander verbunden sind. Auf der oberen Leiterplatte 26.1 sind elektronische Bauteile zu erkennen, die einen Teil der elektronischen Sicherungseinheit 22 darstellen können. Außerdem können durch diese elektronischen Bauteile auch verschiedene Schnittstellen 21 gebildet sein. Zusätzlich weist diese Elektronikeinheit 20 auch einen Antrieb 25 auf, der dazu dient, den Betätigungsmechanismus 40 für den ID-Geber 80 anzutreiben (s. hierzu Fig. 7). Auf diesen Leiterplatten 26 der Elektronikeinheit 20 können auch diverse Überwachungssensoren 23 angeordnet sein, die z. B. den Sicherungssitz eines Befestigungselements, insbesondere der Schraube für das Verschlusselement 13, in der Schließstellung überwachen. Hierbei kann es sich z. B. um einen mechanischen Taster 80.1 handeln. Darüber hinaus können die Überwachungssensoren 23 auch Lichtsensoren, akustische Sensoren oder Bewegungs- und Beschleunigungssensoren umfassen, durch die Diebstahl- und Manipulationsversuche direkt messtechnisch erfassbar sind und entsprechende Meldesignale an die elektronische Sicherungseinheit weitergeben. Sollte diese dabei im Überwachungsmodus eingeschaltet sein, kann hierdurch ein Alarmsignal generiert werden. Die untere Leiterplatte 26.2 der Elektronikeinheit 20 kann als Störsignal-Geber mit einer entsprechenden Spule, die darauf aufgedruckt ist, ausgestaltet sein. Durch diesen Störsignal-Geber ist es möglich, ein Signal des darüber anordbaren externen ID-Gebers 80 vollständig zu stören. Damit ist der ID-Geber 80 dann nicht in der Lage, ein Öffnungssignal für die Zentralverriegelung oder ein Freigabesignal für das Motor-Management-System bzw. die Wegfahrsperre des Fahrzeuges 100 wirksam auszusenden. Unterhalb der unteren Leiterplatte ist ein Fixierelement 15 in Form einer Montageplatte 15 angedeutet, welches durch Haltemittel insbesondere in Form von Rastmitteln am Außengehäuse 11 des Authentifizierungssystems 10 positionierbar bzw. fixierbar ist. Durch einen entsprechenden Überwachungssensor 23, insbesondere in Form eines Hallsensors, oder eines Drucksensors, können die entsprechenden Haltemittel zur Verbindung des Fixierelements 15 am Außengehäuse 11 messtechnisch auf ihren ordnungsgemäßen Sitz bzw. auf ihre Lage hin überwacht werden.

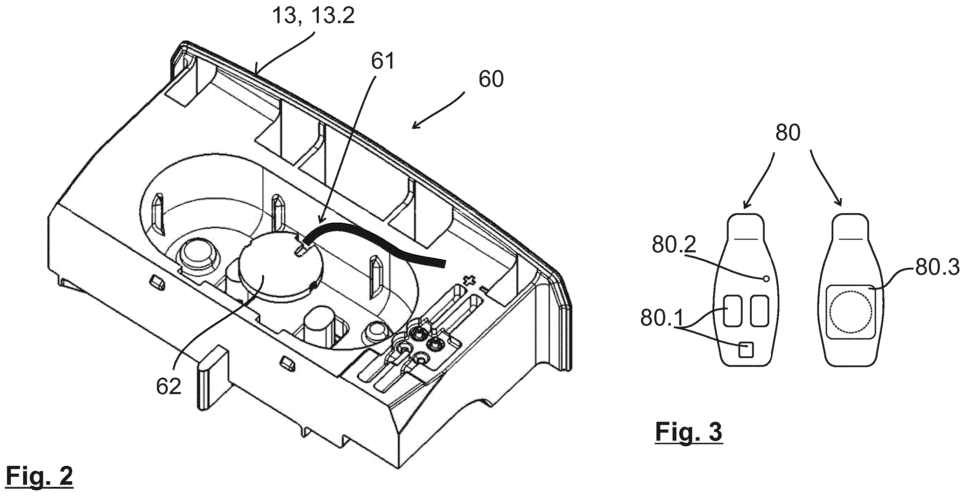

In der Fig. 2 ist beispielhaft eine Einlage 60 zur mechanischen Fixierung des externen ID-Gebers 80 dargestellt. Dabei dient diese Einlage 60 dazu, den externen ID-Geber 80 lokal innerhalb des Außengehäuses 11 zu positionieren. Idealerweise ist dafür ein Aufnahmebereich 61 innerhalb der Einlage 60 vorgesehen, der geometrisch komplementär zur Außenform des ID-Gebers 80 ausgestaltet ist, um somit den ID-Geber 80 innerhalb der Einlage 60 sicher mechanisch fixieren zu können. Damit der ID-Geber 80 stets elektrisch betreibbar ist, kann ein Batterieadapter 62 vorgesehen sein, der den ID-Geber 80 mit Spannung von dem Authentifizierungssystem 10 versorgt. Der entsprechende Batterieadapter 62 ist in Fig. 2 mit den Anschlussdrähten und den Kontaktfahnen zur Kontaktierung mit der Elektronikeinheit 20 dargestellt. Bei diesem Batterieadapter 62 ist es auch möglich, eine Zerstörung des ID-Gebers 80, insbesondere der Elektronik des ID-Gebers 80 durch eine Überspannung zu erzeugen.

In der Fig. 3 ist links in Vorderansicht und rechts in Rückansicht ein beispielhafter ID-Geber 80 gezeigt. In der Vorderansicht sind die Tasten 80.1 sowie ein Anzeige 80 dargestellt. Diese Tasten 80.1 können innerhalb des Authentifizierungssystems 10 durch den Betätigungsmechanismus 40 mechanisch betätigt werden (s. hierzu Fig. 7). Hierbei muss nur das entsprechende Betätigungssignal vorliegen, worauf die Elektronikeinheit 20 über einen Antrieb 25 den Betätigungsmechanismus 40 ansteuert und somit eine rein mechanische Betätigung des ID-Gebers 80 erwirbt. Wie anhand der Rückseite des ID-Gebers 80 zu erkennen ist, weist dieser ein Batteriefach auf, in der der Batterieadapter 62 zu einer permanenten Spannungsversorgung anordbar ist.

In der Fig. 1 ist ferner der Verschlusszustand II des Authentifizierungssystems 10 gezeigt, wobei die Einlage 60, die gestrichelt angedeutet ist, zur mechanischen Fixierung des ID-Gebers 80 durch die Öffnung 12 des Außengehäuses 70 eingeschoben ist (s. hierzu Fig. 4). Die Einlage 60 ist in ihrer entsprechenden Lage (im Verschlusszustand II) innerhalb des Außengehäuses 11 gesichert. Zweckmäßigerweise ist diese Einlage 60 mit Befestigungsmitteln 14 versehen, die von innen mit dem Außengehäuse 11, vorzugsweise selbständig, verrasten. Diese Befestigungselemente 14 können durch die vorgesehenen Überwachungssensoren 23 entsprechend überwacht werden. Eine Veränderung der Lage der Befestigungselemente führt dann zu einem Meldesignal bei den Überwachungssensoren 23, die dieses an die elektronische Sicherungseinheit 22 weiterleiten, worauf gegebenenfalls ein Alarmsignal generiert wird.

In der Fig. 4 ist das Authentifizierungssystem 10 aus Fig. 1 dargestellt, jedoch ohne die Einlage 60 zur mechanischen Fixierung des ID-Gebers 80. Hierbei ist somit die Elektronikeinheit 20 mit dem Betätigungsmechanismus 40 und dem Störsignal-Geber vormontiert in dem gestrichelt dargestellten Außengehäuse 11 des Authentifizierungssystems 10. In dem Spalt zwischen der oberen Leiterplatte 26.1 und der unteren Leiterplatte 26.2 der Elektronikeinheit 20 ist die Einlage 60 zur mechanischen Fixierung des ID-Gebers 80 anordbar, sodass letztendlich auch der externe ID-Geber 80 direkt oberhalb der unteren Leiterplatte 26.2 anordbar ist. Außerdem kann von oben der Betätigungsmechanismus 40 mit seinen Stößeln 43, 44 auf die Tasten 80.1 des ID-Gebers 80 mechanisch einwirken. In der Fig. 4 sind auch beispielhaft Positionen für die Überwachungssensoren 23 dargestellt. Auch die Elektronikeinheit 20 kann über Befestigungselemente, insbesondere Rast- und Halteelemente im Inneren des Außengehäuses 11 des Authentifizierungssystems 10 fixiert werden. Gleichzeitig weist die Elektronikeinheit 20 auch ein Verschlusselement 13, genauso wie auch die Einlage 60 zur mechanischen Fixierung des ID-Gebers 80 auf. Mit den beiden Verschlusselementen 13 kann somit die Öffnung 12 im Außengehäuse 70 vollumfänglich verschlossen werden.

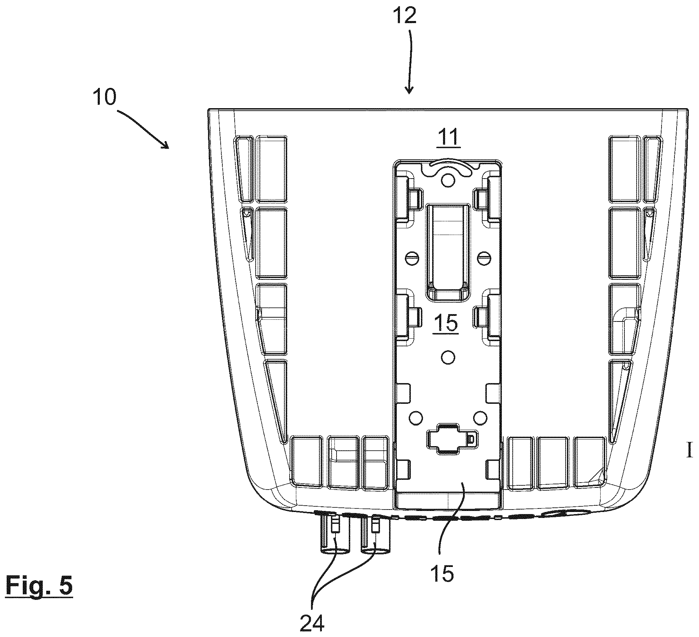

Fig. 5 zeigt eine Bodenansicht von dem Authentifizierungssystem 10 aus Fig. 1. Dabei ist das Fixierelement 15 in Form einer Montageplatte bereits montiert. Üblicherweise wird erst die Montageplatte am Fahrzeug 100 befestigt, z. B. durch Verschrauben oder Vernieten und anschließend wird durch ein Aufschieben des Außengehäuses 11 eine Montage des Authentifizierungssystems 10 vorgenommen. Das Fixierelement 15, insbesondere die Montageplatte, verfügt hierbei über Haltemittel, die eine mechanische Verbindung zwischen dem Fixierelement 15 und dem Außengehäuse 11 erzeugen. Auch diese mechanische Verbindung kann durch die vorgesehenen Überwachungssensoren 23 sicher messtechnisch in der Montageposition I überwacht werden. Somit führt bereits die Entfernung des Außengehäuses 11 von dem Fixierelement 15 zu einem Alarm des Authentifizierungssystems 10.

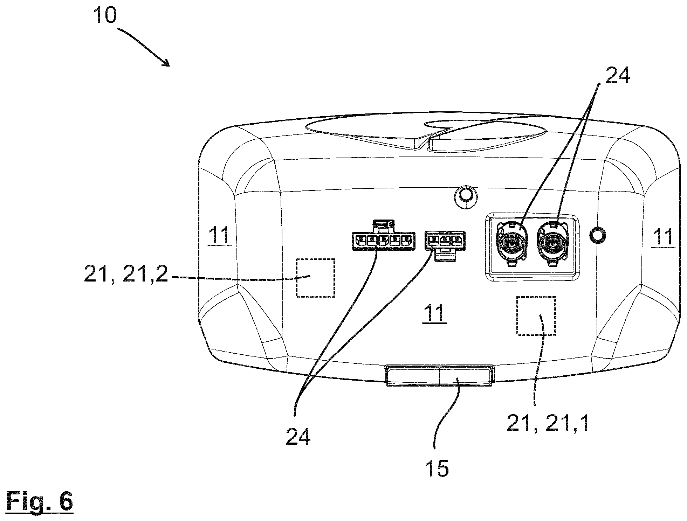

In der Fig. 6 ist die Rückseite des Authentifizierungssystems 10 mit diversen Steckern 24 zum Anschluss an eine fahrzeugseitige Elektronik dargestellt. Im Bereich des Bodens ist das vormontierte Fixierelement 15, welches formschlüssig vom Außengehäuse 70 von zumindest drei Seiten umgeben ist, gezeigt. Idealerweise weisen die Steckverbindungen an der Rückseite auch Rastmittel auf, um somit ein Losrütteln dieser Steckverbindungen im Fahrzeug 100 durch die entsprechende Vibration im Fahrzeug 100 zu vermeiden. Wie gut aus der Fig. 6 auch zu erkennen ist, ist das gesamte Außengehäuse 11 in sich verschlossen bis auf die Öffnung 8. Auch ist dieses Außengehäuse 11 durch ein einteiliges Kunststoffspritzgussteil gebildet. Um den mechanischen Aufbruch zu erschweren, können zusätzliche Verstärkungselemente am oder innerhalb des Außengehäuses 11 vorgesehen sein.

In der Fig. 7 ist in schematischer Schnittansicht der mechanische Betätigungsmechanismus 40 mit seinem Antriebsrad 41 und zumindest zwei Betätigungsstößeln 43, 44 für den externen ID-Geber 80 auf einer Antriebswelle 42 gezeigt. Der ID-Geber 80 ist zur sicheren Bedienung seiner Tasten 80.1 innerhalb der Einlage 60 fixiert. Die mechanische Betätigung (zur Bedienung) der Tasten 80.1 des ID-Gebers 80 erfolgt über die beiden (vorzugsweise exzentrischen) Betätigungsstößel 43, 44 die von der Antriebswelle 42 angetrieben werden. Das Antriebsrad 41.2 des Betätigungsmechanismus 40 wird durch ein Schneckenrad 41.1 vom elektrischen Antrieb 25 angetrieben. Der Antrieb 25 selbst wird durch die Elektronikeinheit 20 angesteuert. Dieses erfolgt durch ein drahtloses Betätigungssignal, welches von außen über die erste Schnittstelle 21.1 in das Authentifizierungssystem 10 gelangt.

In der Fig. 8 ist ein erfindungsgemäßes Fahrzeug 100 mit dem erfindungsgemäßen Authentifizierungssystem 10 dargestellt. Durch die mobile Kommunikationseinrichtung lässt sich ein Freigabecode für das Fahrzeug 100 generieren, wobei auch ggf. die Hilfe eines externen Servers genutzt werden kann. Damit der ID-Geber 80 nicht lose im Fahrzeug 100 liegt, ist auch das Authentifizierungssystem 10 innerhalb des Fahrzeuges 100 angeordnet, in dem dann der ID-Geber 80 eingelegt werden kann.

Die voranstehende Erläuterung der Ausführungsformen beschreibt die vorliegende Erfindung ausschließlich im Rahmen von Beispielen.

### Bezugszeichenliste

- 10: Authentifizierungssystem
- 11: Außengehäuse
- 12: Öffnung
- 13: Verschlusselement
- 13.1: erstes Verschlusselement
- 13.2: zweites Verschlusselement
- 14: Befestigungsmittel
- 15: Fixierelement, insbesondere Montageplatte

- 20: Elektronikeinheit
- 21: Schnittstelle
- 21.1: erste Schnittstelle
- 21.2: zweite Schnittstelle
- 22: elektrische Sicherungseinheit
- 23: Überwachungssensor
- 23.1: erster Überwachungssensor
- 23.2: zweiter Überwachungssensor
- 24: Stecker
- 25: Antrieb
- 26: Leiterplatte
- 26.1: untere Leiterplatte
- 26.2: obere Leiterplatte

- 40: Betätigungsmechanismus
- 41: Antriebsrad
- 42: Antriebswelle (mit Vielzahnprofil)
- 43: erster Betätigungsstößel
- 44: zweiter Betätigungsstößel
- 60: Einlage
- 61: Aufnahmebereich für 80
- 62: Batterieadapter

- 70: mobiles Kommunikationsgerät

- 80: ID-Geber, elektronischer Schlüssel
- 80.1: Taste
- 80.2: Anzeige

- 100: Fahrzeug, insbesondere KFZ
- 101: Managementsystem mit elektr. Wegfahrsperre

- I: Montageposition
- II: Verschlusszustand

## Patentansprüche

1. Authentifizierungssystem (10) für ein Fahrzeug (100), insbesondere ein KFZ (100), zur Aufbewahrung eines ID-Gebers (80) in dem Fahrzeug (100) mit einem Außengehäuse (11), in welcher der ID-Geber (80) aufbewahrbar ist, wobei eine Elektronikeinheit (20) für das Authentifizierungssystem (10) vorhanden ist, wobei die Elektronikeinheit (10) zumindest eine Schnittstelle (21) aufweist, wodurch der ID-Geber (80) von außerhalb des Authentifizierungssystems (10) betätigbar ist,
**dadurch gekennzeichnet,**
**dass** eine elektronische Sicherungseinheit vorgesehen ist, um zumindest die sichere Aufbewahrung des ID-Gebers (80) innerhalb des Außengehäuses (11) zu überwachen,
wobei ein Fixierelement (15) zur Befestigung des Authentifizierungssystems (10) im Fahrzeug (100) vorgesehen ist,
wobei zumindest ein Haltemittel zur mechanischen Verbindung zwischen dem Fixierelement (15) und dem Außengehäuse (11) in einer Montageposition (I) vorgesehen ist,
wobei die elektronische Sicherungseinheit zumindest einen Überwachungssensor (23) aufweist, wobei die mechanische Verbindung zwischen dem Fixierelement (15) und dem Außengehäuse (11) in der Montageposition (I) durch den zumindest einen Überwachungssensor (23) überwachbar ist.

2. Authentifizierungssystem (10) nach Anspruch 1,
**dadurch gekennzeichnet,**
**dass** der ID-Geber (80), vorzugsweise mechanisch, durch das Authentifizierungssystem (10) betätigbar ist,
wobei vorzugsweise ein Betätigungssignal für den ID-Geber (80) von außerhalb, insbesondere über die Schnittstelle (21), zum Authentifizierungssystems (10) gelangt.

3. Authentifizierungssystem (10) nach einem der vorherigen Ansprüche,
**dadurch gekennzeichnet,**
**dass** ein elektrischer Antrieb (25), insbesondere zur mechanischen Betätigung des ID-Gebers (80), innerhalb des Außengehäuses (11) vorgesehen ist,
wobei vorzugsweise der Antrieb (25) durch die Elektronikeinheit (20), insbesondere aufgrund eines vorliegenden Betätigungssignals, welches von außerhalb zum Authentifizierungssystem (10) gelangt ist, ansteuerbar ist.

4. Authentifizierungssystem (10) nach einem der vorherigen Ansprüche,
**dadurch gekennzeichnet,**
**dass** eine Einlage (60) zur mechanischen Fixierung des ID-Gebers (80) vorgesehen ist, und die Einlage (60) innerhalb des Außengehäuses (11) angeordnet ist, und/oder
**dass** durch einen Betätigungsmechanismus (40), der vorzugsweise durch den Antrieb (25) antreibbar ist, der ID-Geber (80) mechanisch betätigbar ist, und/oder
**dass** durch einen Batterieadapter (62) die Spannungsversorgung des ID-Gebers (80) ausführbar ist, wobei insbesondere der Batterieadapter (62) elektrisch mit der Elektronikeinheit (20) verbindbar ist.

5. Authentifizierungssystem (10) nach einem der vorherigen Ansprüche,
**dadurch gekennzeichnet,**
**dass** das Authentifizierungssystem (10) über eine eigene Spannungsversorgung verfügt, wobei vorzugsweise die Spannungsversorgung zumindest einen Akku, eine Batterie oder einen Kondensator aufweist, und/oder
wobei insbesondere die eigene Spannungsversorgung des Authentifizierungssystems (10) unabhängig von einer Fahrzeugbatterie betreibbar ist, und/oder
wobei die eigene Spannungsversorgung des Authentifizierungssystems (10) elektrisch wiederaufladbar ist.

6. Authentifizierungssystem (10) nach einem der vorherigen Ansprüche,
**dadurch gekennzeichnet,**
**dass** die elektronische Sicherungseinheit Teil der Elektronikeinheit (20) des Authentifizierungssystems (10) ist, wobei insbesondere die elektronische Sicherungseinheit auf einer Leiterplatte der Elektronikeinheit (20) angeordnet ist, und/oder
**dass** ein Störsignalgeber, vorzugsweise in Form einer Antenne, vorhanden ist, mit dem eine Sende- und/oder Empfangssignal des ID-Gebers (80) störbar ist,
wobei insbesondere der Störsignalgeber durch die Elektronikeinheit (20) ansteuerbar ist, und/oder dass der Überwachungssensor (23) zumindest einen Schalter, Taster (80.1), Magnetschalter, optischen Sensor, Beschleunigungssensor, Berührungssensor (kapazitiv oder induktiv), Drucksensor, Kraftsensor, Hallsensor, Temperatursensor und/oder akustischen Sensor umfasst, und/oder
wobei vorzugsweise der Überwachungssensor (23) unabhängig von der Position der Sicherungseinheit positionierbar ist,
und/oder dass zumindest ein Überwachungssensor (23) bei einem Diebstahlversuch und/oder Manipulationsversuch des Authentifizierungssystems (10) zumindest ein Meldesignal generiert und an die elektronische Sicherungseinheit leitet, die zumindest im Überwachungsmodus ein Alarmsignal auslöst.

7. Authentifizierungssystem (10) nach einem der vorherigen Ansprüche,
**dadurch gekennzeichnet,**
**dass** zumindest ein Verschlusselement (13) vorgesehen ist,
womit insbesondere eine Öffnung (12) im Außengehäuse (11) zumindest teilweise oder ganz verschließbar ist, und/oder
**dass** das Verschlusselement (13) auch zur mechanischen Fixierung der Elektronikeinheit (20) innerhalb des Außengehäuses (11) dient,
und/oder dass zumindest ein Verschlusselement (13) durch wenigstens ein Befestigungselement mit dem Außengehäuse (11) in einer Montageposition (I) befestigbar ist,
wobei insbesondere wenigstens ein Überwachungssensor (23) zumindest das Verschlusselement (13) in seiner Schließposition oder das Befestigungselement in der Montageposition (I) hin überwacht,
wobei vorzugsweise die Einlage (60) zur mechanischen Fixierung des ID-Gebers (80) mit einem weiteren Verschlusselement (13) versehen ist, wobei vorzugsweise die vorhandenen Verschlusselemente (13) in einer Montageposition (I) die gesamte Öffnung (12) vom Außengehäuse (11) gemeinsam verschließen.

8. Authentifizierungssystem (10) nach einem der vorherigen Ansprüche,
**dadurch gekennzeichnet,**
**dass** die erste Schnittstelle (21.1) eine drahtlose Datenübertragung zum Authentifizierungssystem (10) ermöglicht,
wobei vorzugsweise die erste Schnittstelle (21.1) eine bidirektionale Datenübertragung ermöglicht, und/oder
wobei vorzugsweise über die erste Schnittstelle (21.1) eine externe Ansteuerung des Authentifizierungssystems (10) erfolgt, insbesondere um den ID-Geber (80) zu betätigen, und/oder ein Alarmsignal nach außen leitbar ist,
und/oder dass eine zweite Schnittstelle (21.2) vorgesehen ist, die eine Datenübertragung zwischen einer Fahrzeugelektronik und dem Authentifizierungssystem (10) ermöglicht, um vorzugsweise ein Alarmsignal auszutauschen.

9. Authentifizierungssystem (10) nach einem der vorherigen Ansprüche,
**dadurch gekennzeichnet,**
**dass** das Fixierelement (15) in Form einer Montageplatte oder einem Gehäusebinder und/oder zur Befestigung des Außengehäuses (11) im Fahrzeug (100) vorgesehen ist.

10. Authentifizierungssystem (10) nach einem der vorherigen Ansprüche,
**dadurch gekennzeichnet,**
**dass** zumindest zwei Überwachungssensoren (23.2) vorhanden sind,
wobei vorzugsweise in der Montageposition (I) ein erster Überwachungssensor (23.1) das Verschlusselement (13) und ein zweiter Überwachungssensor (23.2) die Montageplatte auf die jeweilige Position hin überwacht,
und/oder dass die Überwachungssensoren (23) über zumindest ein Verbindungskabel mit der Sicherungseinheit elektrisch verbunden sind,
wobei insbesondere auch das jeweilige Verbindungskabel auf Manipulationen hin, z. B. durch Widerstandsmessungen, überwachbar ist.

11. Authentifizierungssystem (10) nach einem der vorherigen Ansprüche,
**dadurch gekennzeichnet,**
**dass** das Außengehäuse (11) ein Kunststoffspritzgussteil ist,
wobei vorzugsweise Verstärkungselemente, insbesondere aus Metall, Carbon und/oder Glasfaser, am bzw. im Außengehäuse (11) vorhanden sind, und/oder
**dass** das Außengehäuse (11) bis auf die eine Öffnung (12) in sich umfassend geschlossen ist.

12. Überwachungsverfahren eines Authentifizierungssystems (10) nach einem der vorherigen Ansprüche für ein Fahrzeug (100) zur Aufbewahrung eines ID-Gebers (80) in dem Fahrzeug (100) mit
einem Außengehäuse (11), in welcher der ID-Geber (80) aufbewahrbar ist,
**dadurch gekennzeichnet,**
**dass** ein Diebstahlversuch und/oder Manipulationsversuch des Authentifizierungssystems (10) zumindest ein Alarmsignal auslöst.

13. Überwachungsverfahren nach Anspruch 12,
**dadurch gekennzeichnet,**
**dass** wenigstens ein mechanischer Diebstahlversuch und/oder wenigstens ein elektronischer oder mechanischer Manipulationsversuch erkannt wird und ein Alarmsignal auslöst,
und/oder dass das Überwachungsverfahren zumindest zwei Betriebsmodi aufweist:
a) den Überwachungsmodus, in dem eine aktive Überwachung des Authentifizierungssystems (10), insbesondere des Außengehäuses (11), stattfindet
b) den Werkstattmodus, in dem die Überwachung deaktiviert ist, um Wartungs- und Reparaturarbeiten am Authentifizierungssystem (10) vornehmen zu können.

14. Überwachungsverfahren nach einem der Ansprüche 12 oder 13,
**dadurch gekennzeichnet,**
**dass** zumindest im Überwachungsmodus das Authentifizierungssystems (10) den ID-Geber (2), insbesondere mechanisch, betätigen kann,
wobei vorzugsweise ein Betätigungssignal für den ID-Geber (80) von außerhalb, vorzugsweise über eine Schnittstelle (21), zum Authentifizierungssystems (10) gelangt.

15. Überwachungsverfahren nach einem der Ansprüche 12, 13 oder 14,
**dadurch gekennzeichnet,**
**dass** bei einem ausgelösten Alarmsignal eine Zerstörung des ID-Gebers (80), insbesondere der Elektronik des ID-Gebers (80), durchgeführt wird, und/oder
**dass** bei einem ausgelösten Alarmsignal ein Warnsignal an das Managementsystem vom Fahrzeug (100) geleitet wird, wodurch vorzugsweise eine elektrische Wegfahrsperre blockiert wird, und/oder
**dass** bei einem ausgelösten Alarmsignal eine akustische Sirene angesteuert wird, und/oder
**dass** bei einem ausgelösten Alarmsignal ein Warnsignal an einen externen Assistenz-Server weitergeleitet wird, und/oder
**dass** bei einem ausgelösten Alarmsignal ein Notsignal ausgesendet wird, vorzugsweise an die Polizei und/oder an einen Sicherungsdienst.

## Claims

1. Authentication system (10) for a vehicle (100), in particular a motor vehicle (100), for storing an ID transmitter (80) in the vehicle (100) with
an outer housing (11) in which the ID transmitter (80) can be stored, wherein an electronic unit (20) for the authentication system (10) is provided,
wherein the electronic unit (20) has at least one interface (21), whereby the ID transmitter (80) can be actuated from outside the authentication system (10),
**characterized in that**
an electronic securing unit is provided in order to monitor at least the secure storage of the ID transmitter (80) within the outer housing (11),
wherein a fixing element (15) is provided for fixing the authentication system (10) in the vehicle (100),
wherein at least one retaining means is provided for the mechanical connection between the fixing element (15) and the outer housing (11) in a mounting position (I),
wherein the electronic securing unit has at least one monitoring sensor (23), wherein the mechanical connection between the fixing element (15) and the outer housing (11) in the mounting position (I) can be monitored by the at least one monitoring sensor (23).

2. Authentication system (10) according to claim 1,
**characterized in that**
the ID transmitter (80) can be actuated, preferably mechanically, by the authentication system (10),
wherein preferably an actuation signal for the ID transmitter (80) reaches the authentication system (10) from outside, in particular via the interface (21).

3. Authentication system (10) according to any of the preceding claims,
**characterized in that**
an electric drive (25), in particular for mechanical actuation of the ID transmitter (80), is provided inside the outer housing (11),
wherein preferably the drive (25) can be actuated by the electronic unit (20), in particular on the basis of an existing actuation signal which has reached the authentication system (10) from outside.

4. Authentication system (10) according to any of the preceding claims,
**characterized in that**
an insert (60) is provided for mechanically fixing the ID transmitter (80), and the insert (60) is arranged inside the outer housing (11), and/or
**in that** the ID transmitter (80) can be mechanically actuated by an actuating mechanism (40), which is preferably drivable by the drive (25), and/or
**in that** the power supply of the ID transmitter (80) can be carried out by a battery adapter (62), in particular the battery adapter (62) being electrically connectable to the electronic unit (20).

5. Authentication system (10) according to any of the preceding claims,
**characterized in that**
the authentication system (10) has its own power supply, the power supply preferably having at least one rechargeable battery, a battery or a capacitor, and/or
wherein, in particular, the authentication system's (10) own power supply can be operated independently of a vehicle battery, and/or
wherein the authentication system's (10) own power supply is electrically rechargeable.

6. Authentication system (10) according to any of the preceding claims,
**characterized in that**
the electronic securing unit is part of the electronic unit (20) of the authentication system (10), in particular the electronic securing unit being arranged on a printed circuit board of the electronic unit (20), and/or
**in that** an interference signal transmitter, preferably in the form of an antenna, is present, with which a transmit and/or receive signal of the ID transmitter (80) can be interfered with,
wherein, in particular, the interference signal generator can be controlled by the electronic unit (20),
and/or that the monitoring sensor (23) comprises at least one switch, button (80.1), magnetic switch, optical sensor, acceleration sensor, touch sensor (capacitive or inductive), pressure sensor, force sensor, Hall sensor, temperature sensor and/or acoustic sensor, and/or
wherein preferably the monitoring sensor (23) can be positioned independently of the position of the securing unit,
and/or that at least one monitoring sensor (23) generates at least one message signal in the event of an attempted theft and/or attempted manipulation of the authentication system (10) and transmits it to the electronic securing unit, which triggers an alarm signal at least in monitoring mode.

7. Authentication system (10) according to any of the preceding claims,
**characterized in that**
at least one locking element (13) is provided,
with which, in particular, an opening (12) in the outer housing (11) can be at least partially or completely closed, and/or
that the locking element (13) also serves to mechanically secure the electronics unit (20) within the outer housing (11),
and/or that at least one locking element (13) can be fastened to the outer housing (11) in a mounting position (I) by at least one fastening element,
wherein, in particular, at least one monitoring sensor (23) monitors at least the locking element (13) in its closed position or the fastening element in the mounting position (I),
wherein preferably the insert (60) is provided with a further locking element (13) for mechanically fixing the ID transmitter (80), wherein preferably the existing locking elements (13) together close the entire opening (12) of the outer housing (11) in a mounting position (I).

8. Authentication system (10) according to any of the preceding claims,
**characterized in that**
the first interface (21.1) enables wireless data transmission to the authentication system (10),
wherein preferably the first interface (21.1) enables bidirectional data transmission, and/or
wherein the authentication system (10) is preferably externally controlled via the first interface (21.1), in particular to actuate the ID transmitter (80), and/or an alarm signal can be transmitted to the outside,
and/or that a second interface (21.2) is provided which enables data transmission between vehicle electronics and the authentication system (10),
to preferably exchange an alarm signal.

9. Authentication system (10) according to any of the preceding claims,
**characterized in that**
the fixing element (15) is provided in the form of a mounting plate or a housing binder and/or for fastening the outer housing (11) in the vehicle (100).

10. Authentication system (10) according to any of the preceding claims,
**characterized in that**
at least two monitoring sensors (23) are present,
wherein preferably in the mounting position (I) a first monitoring sensor (23.1) monitors the locking element (13) and a second monitoring sensor (23.2) monitors the mounting plate for the respective position,
and/or that the monitoring sensors (23) are electrically connected to the securing unit via at least one connecting cable,
in particular, the respective connecting cable can also be monitored for tampering, e.g. by measuring resistance.

11. Authentication system (10) according to any of the preceding claims,
**characterized in that**
the outer housing (11) is a plastic injection-molded part,
wherein reinforcing elements, in particular made of metal, carbon and/or glass fiber, are preferably present on or in the outer housing (11), and/or
that the outer housing (11) is closed in itself except for the one opening (12).

12. Monitoring method of an authentication system (10) according to one of the preceding claims for a vehicle (100) for storing an ID transmitter (80) in the vehicle (100), comprising
an outer housing (11) in which the ID transmitter (80) can be stored,
**characterized in that**
an attempted theft and/or manipulation of the authentication system (10) triggers at least one alarm signal.

13. Monitoring method according to claim 12,
**characterized in that**
at least one mechanical theft attempt and/or at least one electronic or mechanical manipulation attempt is detected and triggers an alarm signal,
and/or that the monitoring method has at least two operating modes:
a) the monitoring mode in which active monitoring of the authentication system (10), in particular the outer housing (11), takes place
b) workshop mode, in which monitoring is deactivated so that maintenance and repair work can be carried out on the authentication system (10).

14. Monitoring method according to any one of claims 12 or 13,
**characterized in that**
at least in monitoring mode, the authentication system (10) can actuate the ID transmitter (80), in particular mechanically,
wherein preferably an actuation signal for the ID transmitter (80) reaches the authentication system (10) from outside, preferably via an interface (21).

15. Monitoring method according to any one of claims 12, 13 or 14,
**characterized in that**
when an alarm signal is triggered, the ID transmitter (80), in particular the electronics of the ID transmitter (80), is destroyed, and/or
that a warning signal is sent to the management system of the vehicle (100) when an alarm signal is triggered, preferably blocking an electric immobilizer, and/or
an acoustic siren is activated when an alarm signal is triggered, and/or
that a warning signal is forwarded to an external assistance server when an alarm signal is triggered, and/or
that an emergency signal is sent out when an alarm signal is triggered, preferably to the police and/or a security service.

## Revendications

1. Système d'authentification (10) pour un véhicule (100), en particulier un véhicule automobile (100), pour le stockage d'un transmetteur ID (80) dans le véhicule (100) avec un boîtier extérieur (11) dans lequel le transmetteur ID (80) peut être conservé, une unité électronique (20) étant présente pour le système d'authentification (10),
l'unité électronique (20) présentant au moins une interface (21), grâce à laquelle le transmetteur ID (80) peut être actionné de l'extérieur du système d'authentification (10),
**caractérisé en ce qu'**
une unité de sécurité électronique est prévue pour surveiller au moins la conservation sûre du transmetteur ID (80) à l'intérieur du boîtier extérieur (11),
un élément de fixation (15) étant prévu pour fixer le système d'authentification (10) dans le véhicule (100),
au moins un moyen de maintien étant prévu pour la liaison mécanique entre l'élément de fixation (15) et le boîtier extérieur (11) dans une position de montage (I),
l'unité de sécurité électronique présentant au moins un capteur de surveillance (23), la liaison mécanique entre l'élément de fixation (15) et le boîtier extérieur (11) pouvant être surveillée dans la position de montage (I) par le au moins un capteur de surveillance (23).

2. Système d'authentification (10) selon la revendication 1,
**caractérisé en ce que**
le transmetteur ID (80) peut être actionné, de préférence mécaniquement, par le système d'authentification (10),
un signal d'actionnement pour le transmetteur ID (80) parvenant de préférence au système d'authentification (10) depuis l'extérieur, en particulier via l'interface (21).

3. Système d'authentification (10) selon l'une quelconque des revendications précédentes,
**caractérisé en ce qu'**
un entraînement électrique (25), en particulier pour l'actionnement mécanique du transmetteur ID (80), est prévu à l'intérieur du boîtier extérieur (11),
l'entraînement (25) pouvant de préférence être commandé par l'unité électronique (20), en particulier sur la base d'un signal d'actionnement présent, qui est parvenu au système d'authentification (10) depuis l'extérieur.

4. Système d'authentification (10) selon l'une quelconque des revendications précédentes,
**caractérisé en ce qu'**
un insert (60) est prévu pour la fixation mécanique du transmetteur ID (80), et l'insert (60) est disposé à l'intérieur du boîtier extérieur (11), et/ou
**en ce que** le transmetteur ID (80) peut être actionné mécaniquement par un mécanisme d'actionnement (40), qui peut de préférence être entraîné par l'entraînement (25), et/ou
**en ce que** l'alimentation en tension du transmetteur ID (80) peut être réalisée par un adaptateur de batterie (62), l'adaptateur de batterie (62) pouvant notamment être relié électriquement à l'unité électronique (20).

5. Système d'authentification (10) selon l'une quelconque des revendications précédentes,
**caractérisé en ce que**
le système d'authentification (10) dispose de sa propre alimentation en tension, l'alimentation en tension présentant de préférence au moins un accumulateur, une batterie ou un condensateur, et/ou
l'alimentation en tension propre du système d'authentification (10) pouvant notamment être exploitée indépendamment d'une batterie de véhicule, et/ou
l'alimentation propre du système d'authentification (10) étant rechargeable électriquement.

6. Système d'authentification (10) selon l'une quelconque des revendications précédentes,
**caractérisé en ce que**
l'unité de sécurité électronique fait partie de l'unité électronique (20) du système d'authentification (10), l'unité de sécurité électronique étant notamment disposée sur une carte de circuit imprimé de l'unité électronique (20), et/ou
qu'il existe un émetteur de signaux parasites, de préférence sous la forme d'une antenne, avec lequel un signal d'émission et/ou de réception du transmetteur ID (80) peut être perturbé,
l'émetteur de signaux parasites pouvant notamment être commandé par l'unité électronique (20),
et/ou **en ce que** le capteur de surveillance (23) comprend au moins un interrupteur, un bouton-poussoir (80.1), un interrupteur magnétique, un capteur optique, un capteur d'accélération, un capteur de contact (capacitif ou inductif), un capteur de pression, un capteur de force, un capteur à effet Hall, un capteur de température et/ou un capteur acoustique, et/ou
dans lequel, de préférence, le capteur de surveillance (23) peut être positionné indépendamment de la position de l'unité de sécurité,
et/ou **en ce qu'**au moins un capteur de surveillance (23) génère au moins un signal de signalisation lors d'une tentative de vol et/ou de manipulation du système d'authentification (10) et le transmet à l'unité de sécurité électronique qui déclenche un signal d'alarme au moins en mode de surveillance.

7. Système d'authentification (10) selon l'une quelconque des revendications précédentes,
**caractérisé en ce qu'**
au moins un élément de fermeture (13) est prévu,
ce qui permet notamment d'obturer au moins partiellement ou totalement une ouverture (12) dans le boîtier extérieur (11), et/ou
**en ce que** l'élément de fermeture (13) sert également à la fixation mécanique de l'unité électronique (20) à l'intérieur du boîtier extérieur (11),
et/ou **en ce qu'**au moins un élément de fermeture (13) peut être fixé par au moins un élément de fixation avec le boîtier extérieur (11) dans une position de montage (I),
au moins un capteur de surveillance (23) surveillant en particulier au moins l'élément de fermeture (13) dans sa position de fermeture ou l'élément de fixation dans la position de montage (I),
de préférence l'insert (60) étant pourvu d'un autre élément de fermeture (13) pour la fixation mécanique du transmetteur ID (80), de préférence les éléments de fermeture (13) existants fermant ensemble l'ensemble de l'ouverture (12) du boîtier extérieur (11) dans une position de montage (I).

8. Système d'authentification (10) selon l'une quelconque des revendications précédentes,
**caractérisé en ce que**
la première interface (21.1) permet une transmission de données sans fil vers le système d'authentification (10),
la première interface (21.1) permettant de préférence une transmission bidirectionnelle des données, et/ou
une commande externe du système d'authentification (10) s'effectuant de préférence par l'intermédiaire de la première interface (21.1), en particulier pour actionner le transmetteur ID (80), et/ou un signal d'alarme pouvant être transmis vers l'extérieur,
et/ou **en ce qu'**il est prévu une deuxième interface (21.2) qui permet une transmission de données entre une électronique de véhicule et le système d'authentification (10),
pour échanger de préférence un signal d'alarme.

9. Système d'authentification (10) selon l'une quelconque des revendications précédentes,
**caractérisé en ce que**
l'élément de fixation (15) est prévu sous la forme d'une plaque de montage ou d'une attache de boîtier et/ou pour la fixation du boîtier extérieur (11) dans le véhicule (100).

10. Système d'authentification (10) selon l'une quelconque des revendications précédentes,
**caractérisé en ce que**
le système comprend au moins deux capteurs de surveillance (23),
de préférence dans la position de montage (I), un premier capteur de surveillance (23.1) surveillant l'élément de fermeture (13) et un deuxième capteur de surveillance (23.2) surveillant la plaque de montage en fonction de la position respective,
et/ou **en ce que** les capteurs de surveillance (23) sont reliés électriquement à l'unité de sécurité par au moins un câble de liaison,
sachant qu'il est également possible de surveiller en particulier le câble de liaison respectif pour détecter des manipulations, par exemple par des mesures de résistance.

11. Système d'authentification (10) selon l'une quelconque des revendications précédentes,
**caractérisé en ce que**
le boîtier extérieur (11) est une pièce moulée par injection de matière plastique,
des éléments de renforcement, en particulier en métal, en carbone et/ou en fibre de verre, étant de préférence présents sur ou dans le boîtier extérieur (11), et/ou
**en ce que** le boîtier extérieur (11) est fermé en soi, à l'exception de l'une des ouvertures (12).

12. Procédé de surveillance d'un système d'authentification (10) selon l'une des revendications précédentes pour un véhicule (100) pour le stockage d'un transmetteur ID (80) dans le véhicule (100) avec
un boîtier extérieur (11), dans lequel le transmetteur ID (80) peut être conservé,
**caractérisé en ce qu'**
une tentative de vol et/ou de manipulation du système d'authentification (10) déclenche au moins un signal d'alarme.

13. Procédé de surveillance selon la revendication 12,
**caractérisé en ce qu'**
au moins une tentative de vol mécanique et/ou au moins une tentative de manipulation électronique ou mécanique soit détectée et déclenche un signal d'alarme,
et/ou **en ce que** le procédé de surveillance présente au moins deux modes de fonctionnement :
a) le mode de surveillance, dans lequel une surveillance active du système d'authentification (10), en particulier du boîtier extérieur (11), a lieu
b) le mode atelier, dans lequel la surveillance est désactivée afin de pouvoir effectuer des travaux de maintenance et de réparation sur le système d'authentification (10).

14. Procédé de surveillance selon l'une des revendications 12 ou 13,
**caractérisé en ce qu'**
au moins en mode de surveillance, le système d'authentification (10) peut actionner, en particulier mécaniquement, le transmetteur ID (80),
un signal d'actionnement pour le transmetteur ID (80) arrivant de préférence de l'extérieur, de préférence par une interface (21), au système d'authentification (10).

15. Procédé de surveillance selon l'une des revendications 12, 13 ou 14,
**caractérisé en ce qu'**
en cas de signal d'alarme déclenché, une destruction du transmetteur ID (80), en particulier de l'électronique du transmetteur ID (80), est effectuée, et/ou
**en ce que**, lorsqu'un signal d'alarme est déclenché, un signal d'avertissement est transmis au système de gestion par le véhicule (100), ce qui bloque de préférence un dispositif électrique d'immobilisation, et/ou
**en ce que**, lorsqu'un signal d'alarme est déclenché, une sirène acoustique est commandée, et/ou
**en ce que**, lorsqu'un signal d'alarme est déclenché, un signal d'avertissement est transmis à un serveur d'assistance externe, et/ou
**en ce que**, lorsqu'un signal d'alarme est déclenché, un signal de détresse est envoyé, de préférence à la police et/ou à un service de sécurité.
